Europäisches Patentamt

European Patent Office

Office européen des brevets

(19)

(11) **EP 1 183 453 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: 00931209.1

(22) Anmeldetag: **13.05.2000**

(51) Int Cl.⁷: **F02D 41/14**

(86) Internationale Anmeldenummer:
**PCT/EP2000/004325**

(87) Internationale Veröffentlichungsnummer:
**WO 2000/071877 (30.11.2000 Gazette 2000/48)**

(54) **VERFAHREN ZUR ENTSCHWEFELUNG VON WENIGSTENS EINEM IN EINEM ABGASKANAL EINER VERBRENNUNGSKRAFTMASCHINE ANGEORDNETEN NOx-SPEICHERKATALYSATOR**

METHOD FOR DESULFURIZATION OF AT LEAST ONE NOx STORAGE CATALYST MOUNTED IN THE EXHAUST GAS DUCT OF AN INTERNAL COMBUSTION ENGINE

PROCEDE DE DESULFURATION D'AU MOINS UN CATALYSEUR ACCUMULANT DU NOx, AGENCE DANS UN CONDUIT DE GAZ D'ECHAPPEMENT D'UN MOTEUR A COMBUSTION INTERNE

(84) Benannte Vertragsstaaten:
**DE ES FR GB IT SE**

(30) Priorität: **21.05.1999 DE 19923481**

(43) Veröffentlichungstag der Anmeldung:
**06.03.2002 Patentblatt 2002/10**

(73) Patentinhaber: **Volkswagen Aktiengesellschaft 38436 Wolfsburg (DE)**

(72) Erfinder:
• **POTT, Ekkehard**
  **D-38518 Gifhorn (DE)**
• **GOTTSCHLING, Martina**
  **D-38114 Braunschweig (DE)**
• **HELD, Wolfgang**
  **D-38448 Wolfsburg (DE)**
• **HAHN, Hermann**
  **D-38165 Lehre (DE)**

(56) Entgegenhaltungen:
**EP-A- 0 899 430          US-A- 5 758 493**

**Beschreibung**

Die Erfindung betrifft ein Verfahren zur Entschwefelung von wenigstens einem in einem Abgaskanal einer Verbrennungskraftmaschine angeordneten $NO_x$-Speicherkatalysator mit den im Oberbegriff des Anspruchs 1 genannten Merkmalen.

Verfahren zur Entschwefelung von $NO_x$-Speicherkatalysatoren sind bekannt. Dabei müssen während der Entschwefelung sogenannte Regenerationsparameter, wie eine Mindesttemperatur am $NO_x$-Speicherkatalysator und ein Arbeitsmodus der Verbrennungskraftmaschine, mit $\lambda \leq 1$ eingestellt werden.

Unter einem Arbeitsmodus der Verbrennungskraftmaschine mit $\lambda < 1$ überwiegt eine Konzentration reduzierender Gaskomponenten, wie CO, HC oder $H_2$, eine Konzentration von Sauerstoff (fette Atmosphäre). Bei $\lambda > 1$ ist die Sauerstoffkonzentration dominierend, und es wird vermehrt $NO_x$ gebildet (magere Atmosphäre). Während eines Betriebes der Verbrennungskraftmaschine in magerer Atmosphäre wird neben $NO_x$, durch eine Verbrennung wechselnder Schwefelanteile im Kraftstoffgemisch, $SO_2$ gebildet. Dieses wird ebenso wie das $NO_x$ in magerer Atmosphäre von dem $NO_x$-Speicherkatalysator absorbiert, wobei die $SO_2$-Absorptio zur Bildung von lokalen Inhomogenitäten infolge einer Sulfatkornbildung führen kann. Dieser Prozeß führt zu einer Reduzierung einer katalytisch aktiven Oberfläche und einer verringerten Kapazität des $NO_x$-Speicherkatalysators und bietet einen Angriffspunkt für korrosive Prozesse, die eine dauerhafte Schädigung des $NO_x$-Speicherkatalysators nach sich ziehen können.

Die EP-A-0 899 430 offenbart eine Entschwefelung eines NOx-Speicherkatalysators, wobei bei Vorliegen einer Mindesttemperatur in einer ersten Phase die Brennkraftmaschine auf mager eingestellt wird in einer anschließenden zweiten Phase ein fetter Betrieb gefahren wird, bis eine Entschwefelung erreicht ist.

Dieses Dokument offenbart nicht, daß die Phasen so gesteuert werden, daß die Maschine solange auf mager bzw. fett eingestellt wird, bis ein magerer bzw. fetter Schwellwert am hinter dem Katalysator vorgesehene Gas-Sensor erreicht ist.

Nach der o.g. EP-Schrift geschieht, die Entschwefelung vielmehr mit einer vorgegebenen Anzahl von fetten/mageren Verbrennungen pro Phase.

Es ist daher bekannt, die Entschwefelung in wiederkehrenden Zyklen zu initiieren, wobei eine Feststellung einer Entschwefelungsnotwendigkeit anhand eines vorgebbaren Verschwefelungsgrades des $NO_x$-Speicherkatalysators festgelegt werden kann. Ein solcher Verschwefelungsgrad läßt sich beispielsweise anhand eines $NO_x$-Umsatzes bestimmen, bei dem ein Quotient aus einer Konzentration von $NO_x$ vor dem $NO_x$-Speicherkatalysator und nach dem $NO_x$-Speicherkatalysator gebildet wird. Nach Feststellung der Entschwefelungsnotwendigkeit werden dann geeignete Maßnahmen, beispielsweise eine Spätzündung, eine Nacheinspritzung von während oder nach eines Verbrennungsvorganges oder eine zylinderselektive Vertrimmung der Verbrennungskraftmaschine, durchgeführt, um die Regenerationsparameter einzustellen.

Eine Entschwefelungszeit ist dabei einerseits abhängig von der Höhe der Temperatur, die selbstverständlich auch über einer Mindesttemperatur liegen kann, und andererseits von einer Lage des Lambdawertes. Bei steigenden Temperaturen und/oder sinkenden Lambdawerten verkürzt sich die Entschwefelungszeit. Allerdings wird bei sehr niedrigen Lambdawerten überwiegend $H_2S$ gebildet, während bei Lambdawerten knapp unter 1 überwiegend $SO_2$ entsteht. Eine Bildung von $H_2S$ sollte nach Möglichkeit unterdrückt werden, da diese geruchsintensiv und ausgesprochen giftig ist. Zudem ist ein vollständiger Umsatz der reduzierenden Gaskomponenten bei sehr niedrigen Lambdawerten nicht mehr möglich, so daß ein Schadstoffdurchbruch nicht vermieden werden kann.

Es ist bekannt, die Bildung von $H_2S$ durch eine periodische Beaufschlagung des $NO_x$-Speicherkatalysators mit magerem und fettem Abgas zu unterdrücken. Da die $SO_2$-Bildung kinetisch gegenüber der $H_2S$-Bildung bevorzugt ist, kann durch Wahl einer hinreichend hohen Lambda-Wobblefrequenz die $H_2S$-Bildung weitestgehend unterdrückt werden. Dabei ist nachteilig, daß sich die Entschwefelungszeit deutlich verlängert, und daß ein sich laufend ändernder Katalysatorzustand nicht berücksichtigt wird. So können Alterungserscheinungen, wie beispielsweise eine Abnahme einer Sauerstoffspeicherfähigkeit, nicht berücksichtigt werden.

Dem erfindungsgemäßen Verfahren liegt die Aufgabe zugrunde, die Entschwefelung unter Berücksichtigung zeitlich veränderlicher Katalysatorzustände durchzuführen. Dabei soll. einerseits die $H_2S$-Bildung weitestgehend unterdrückt werden und andererseits die Entschwefelungszeit möglichst gering gehalten werden, so daß ein Kraftstoffmehrverbrauch infolge der Entschwefelung reduziert werden kann.

Erfindungsgemäß wird diese Aufgabe durch das Verfahren zur Entschwefelung mit den im Anspruch 1 genannten Merkmalen gelöst. Dadurch, daß in einer ersten Phase nach Feststellung der Entschwefelungsnotwendigkeit und Vorliegen der Mindesttemperatur die Verbrennungskraftmaschine zunächst so lange auf einen mageren Arbeitsmodus der Verbrennungskraftmaschine mit $\lambda > 1$ eingestellt wird, bis an dem Gassensor ein vorgebbarer erster Schwellenwert für Lambda erreicht wird, und in einer zweiten Phase nach Erreichen des ersten Schwellenwertes die Verbrennungskraftmaschine auf den fetten Arbeitsmodus mit $\lambda < 1$ eingestellt wird, bis an dem Gassensor ein vorgebbarer zweiter Schwellenwert für Lambda erreicht wird, und die erste Phase und nachfolgend die zweite Phase so lange wiederholt werden, bis ein vorgebbarer Verschwefelungsgrad erreicht wird, kann die Entschwefelung mit sehr kurzen Entschwefelungszeiten und unter Bildung von weitestgehend nur $SO_2$ vollzogen werden. Weiterhin hat es sich als vorteilhaft erwiesen, daß während der Entschwefelung eine Edelmetalldesaktivierung durch Sulfitbildung wesentlich geringer gehalten werden kann als bei einer Entschwefelung nach einem herkömmlichen Verfahren.

In einer bevorzugten Ausgestaltung des Verfahrens werden die Betriebsparameter der Verbrennungskraftmaschine derart eingestellt, daß sie einen frei applizierbaren Sollwert für Lambda vor dem $NO_x$-Speicherkatalysator gewähren. Der Sollwert wird dabei als ein Kompromiß zwischen einer kurzen Entschwefelungszeit und einem geringen Übersteuern über die Schwellenwerte gewählt.

In einer weiteren bevorzugten Ausgestaltung des Verfahrens werden in jedem neuen Zyklus der Entschwefelung - also in der ersten und zweiten Phase - die Sollwerte und/oder die Schwellenwerte neu festgelegt. Diese können dann in Abhängigkeit von einer aktuell gespeicherten Schwefelmasse, einer Schwefelmasse zu Beginn der Entschwefelung, einer Katalysatortemperatur oder einer Dauer der ersten und zweiten Phase variiert werden. Denkbar ist weiterhin, während der Entschwefelung die Temperatur sowie die Schwellenwerte zu variieren. Durch die gezeigten Maßnahmen kann die Entschwefelung wesentlich dynamischer an den aktuellen Katalysatorzustand angepaßt werden.

Bevorzugt ist ferner, eine Berechnung der Sauerstoffspeicherfähigkeit zur Festlegung der Schwellenwerte und/oder Sollwerte heranzuziehen. Dabei hat es sich als besonders vorteilhaft erwiesen, den Sollwert für den Arbeitsmodus mit $\lambda < 1$ in Abhängigkeit von der berechneten Sauerstoffspeicherfähigkeit zu gestalten. So kann beispielsweise ab einem vorgebbaren Restsauerstoffgehalt des $NO_x$-Speicherkatalysators der Sollwert in Richtung $\lambda = 1$ geändert werden, so daß das Übersteuern über den Schwellenwert geringgehalten werden kann. Damit sind auch mögliche Schadstoffdurchbrüche der reduzierenden Gaskomponenten weitestgehend unterdrückt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

Figur 1    eine Anordnung eines Katalysatorsystems in einem Abgaskanal einer Verbrennungskraftmaschine;

Figur 2    einen Verlauf von Lambda vor und hinter einem $NO_x$-Speicherkatalysator während einer Entschwefelung und

Figur 3    einen Verlauf von Lambda vor und hinter einem $NO_x$-Speicherkatalysator während der Entschwefelung unter Berücksichtigung einer Sauerstoffspeicherfähigkeit.

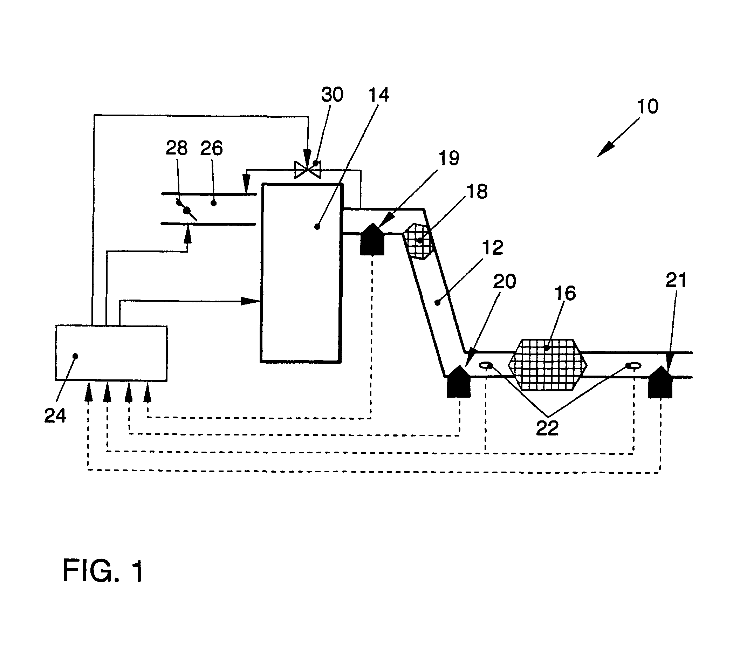

In der Figur 1 ist in schematischer Weise eine Anordnung eines Katalysatorsystems 10 in einem Abgaskanal 12 einer Verbrennungskraftmaschine 14 dargestellt. Das Katalysatorsystem 10 umfaßt einen $NO_x$-Speicherkatalysator 16 und einen Vorkatalysator 18 sowie diverse Temperatursensoren 22. Weiterhin befinden sich Gassensoren 19, 20, 21 in dem Abgaskanal 12, die zur Erfassung wenigstens einer Gaskomponente eines Abgases der Verbrennungskraftmaschine dienen und ein Signal entsprechend einem Gehalt der Gaskomponente am Abgas bereitstellen. Solche Gassensoren 19, 20, 21 sind bekannt und können beispielsweise $NO_x$-Sensoren oder Lambdasonden sein.

Ein Arbeitsmodus der Verbrennungskraftmaschine 14 kann mittels eines Motorsteuergerätes 24 geregelt werden. Wird beispielsweise ein Arbeitsmodus mit $\lambda < 1$ (fette Atmosphäre) gewünscht, so muß eine Sauerstoffkonzentration in einem Saugrohr 26 vor einer Verbrennung eines Kraftstoff-Luft-Gemisches gesenkt werden. Damit erhöhen sich die Anteile reduzierender Gaskomponenten im Abgas im Vergleich zu einem Anteil an Sauerstoff. Beispielsweise kann ein solcher Arbeitsmodus durch eine Reduzierung eines Volumenstroms angesaugter Luft mittels einer Drosselklappe 28 und durch gleichzeitige Zuführung sauerstoffarmen Abgases über ein Abgasrückflußventil 30 erfolgen.

In einem Arbeitsmodus mit $\lambda > 1$ (magere Atmosphäre) wird neben $NO_x$ auch $SO_2$ im $NO_x$-Speicherkatalysator 16 absorbiert, während die geringen Anteile reduzierender Gaskomponenten zumindest bei niedrigen Raumgeschwindigkeiten fast vollständig im Vorkatalysator 18 umgesetzt werden. In Abhängigkeit von einer $NO_x$-Speicherkapazität und einer Desorptionstemperatur des $NO_x$-Speicherkatalysators 16 muß die Verbrennungskraftmaschine 14 zur Regeneration mit $\lambda \leq 1$ betrieben werden. In einem solchen Arbeitsmodus wird das zuvor absorbierte $NO_x$ an einer katalytisch aktiven Oberfläche des $NO_x$-Speicherkatalysators 16 reduziert.

Ebenfalls absorbiertes $SO_2$ wird in Form von Sulfat in dem $NO_x$-Speicherkatalysator 16 eingelagert, wobei allerdings eine Reversibilität dieses Einlagerungsprozesses im Gegensatz zu der Einlagerung von $NO_x$ wesentlich höhere Temperaturen erfordert. Somit muß zur Entschwefelung eine Mindestentschwefelungstemperatur und ein Lambdawert $\leq 1$ vorliegen (Regenerationsparameter).

Eine Entschwefelungsnotwendigkeit ergibt sich aus einer Effizienz des $NO_x$-Speicherkatalysators 16 für eine Konvertierungsreaktion von $NO_x$. Die Erfassung der Effizienz kann mit Hilfe des Gassensors 21 erfolgen, der eine $NO_x$-Konzentration hinter dem $NO_x$-Speicherkatalysator 16 mißt. Aufgrund von Erfahrungswerten oder über eine Messung der $NO_x$-Konzentration vor dem $NO_x$-Speicherkatalysator 16 - beispielsweise mit mindestens einem der Gassensoren 19, 20 - kann auf diese Weise ein Verschwefelungsgrad und damit die Effizienz bestimmt werden. Über die Temperatursensoren 22 läßt sich eine aktuelle Temperatur (Katalysator-

temperatur) am $NO_x$-Speicherkatalysator 16 erfassen, während der aktuelle Lambdawert vor dem $NO_x$-Speicherkatalysator 16 wiederum über zumindest einen der Gassensoren 19 und/oder 20 bestimmbar ist.

Eine Entschwefelungszeit ist abhängig von der Temperatur am $NO_x$-Speicherkatalysator 16 und der Lage des Lambdawertes. Mit steigender Temperatur und sinkendem Lambdawert nimmt die Entschwefelungszeit ab. Die Temperatur kann dabei deutlich über der Mindesttemperatur liegen und kann entsprechend einem Temperaturmodell auch während der Entschwefelung geändert werden.

Bei sehr niedrigen Lambdawerten führt die Entschwefelung überwiegend zu $H_2S$, während bei Lambdawerten knapp unter 1 überwiegend $SO_2$ gebildet wird. Da $H_2S$ geruchsintensiv ist, soll dessen Bildung im erfindungsgemäßen Verfahren weitestgehend unterdrückt werden. Weiterhin ist nachteilig, daß bei sehr niedrigen Lambdawerten eine vollständige Umsetzung der reduzierenden Gaskomponenten nicht mehr möglich ist, und somit sogenannte Schadstoffdurchbrüche auftreten. Da die $H_2S$-Bildung kinetisch gehemmt ist gegenüber der $SO_2$-Bildung, kann über einen periodischen Wechsel des Arbeitsmodus der Verbrennungskraftmaschine die $H_2S$-Bildung zurückgedrängt werden.

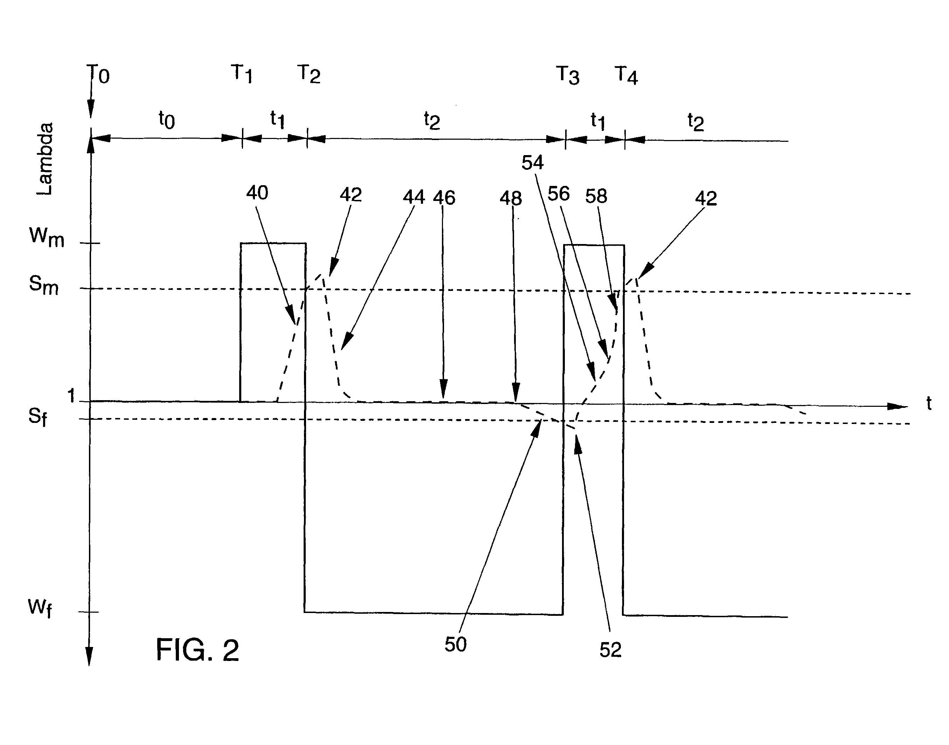

In der Figur 2 ist beispielhaft ein Verlauf eines Lambdawertes vor und hinter dem $NO_x$-Speicherkatalysator 16 dargestellt. Der Verlauf des Lambdawertes vor dem $NO_x$-Speicherkatalysator 16 (durchgezogene Linie) kann mittels des Gassensors 20 erfaßt werden, während der Gassensor 21 einen Verlauf des Lambdawertes hinter dem $NO_x$-Speicherkatalysator 16 wiedergibt (gestrichelte Linie). Wenn zu einem Zeitpunkt $T_0$ die Entschwefelungsnotwendigkeit festgestellt wird und beispielsweise noch nicht die Mindesttemperatur erreicht wurde, so kann in einer Aufheizphase $t_0$ durch eine zumindest temporäre Beeinflussung wenigstens eines Betriebsparameters der Verbrennungskraftmaschine 14 eine Abgastemperatur erhöht werden. Dazu wird die üblicherweise zur Minderung eines Kraftstoffverbrauchs in dem mageren Arbeitsmodus betriebene Verbrennungskraftmaschine 14 auf einen Arbeitsmodus mit $\lambda = 1$ eingestellt, da das Abgas hier eine höhere Temperatur aufweist. Ein solches Vorgehen ist bekannt und soll hier nicht näher erläutert werden.

Nach Erreichen der Mindesttemperatur zu einem Zeitpunkt $T_1$ wird während der Phase $t_1$ die Verbrennungskraftmaschine 14 derart geregelt, daß sich vor dem $NO_x$-Speicherkatalysator 16 ein Lambdawert entsprechend einem vorgebbaren Sollwert $W_m$ einstellt. Der Sollwert $W_m$ sollte dabei in einem Lambdabereich von 1,02 bis 4,00, bevorzugt 1,05 bis 1,7, insbesondere 1,15 bis 1,4, liegen.

Eine Änderung des Lambdawertes hinter dem $NO_x$-Speicherkatalysator 16 findet zeitverzögert statt. Dabei basiert diese Zeitverzögerung nicht nur auf einem Totvolumen des $NO_x$-Speicherkatalysators 16, sondern

ist auch abhängig von einer Aus- und Einlagerung des Sauerstoffs in den $NO_x$-Speicherkatalysator 16. In einem Bereich 40 steigt dabei der Lambdawert hinter dem $NO_x$-Speicherkatalysator 16 steil an, wobei eine Steilheit des Anstiegs durch die Höhe des Sollwertes $W_m$ bestimmbar ist. Je höher $W_m$ liegt, um so steiler steigt der Bereich 40 an. Ab einem Zeitpunkt $T_2$ erreicht der Lambdawert hinter dem $NO_x$-Speicherkatalysator 16 einen ersten Schwellenwert $S_m$, woraufhin die Verbrennungskraftmaschine 14 auf den fetten Arbeitsmodus eingestellt wird. Dabei wird wiederum ein Sollwert $W_f$ für Lambda vor dem $NO_x$-Speicherkatalysator 16 festgelegt. Der Sollwert $W_f$ liegt in einem Bereich von $\lambda = 0,995$ bis 0,65, bevorzugt 0,99 bis 0,75, insbesondere 0,98 bis 0,85.

Der den Wechsel des Arbeitsmodus auslösende Schwellenwert $S_m$ läßt sich über folgende Gleichung ermitteln, wobei der Schwellenwert $S_m$ jedoch immer mindestens den Wert $\lambda = 1,01$ aufweist:

$$\text{Schwellenwert } S_m = 1 + F \cdot (\text{Sollwert } W_m - 1)$$

Ein Faktor F liegt dabei in einem Bereich von 0,2 bis 0,99, bevorzugt 0,5 bis 0,9, insbesondere bei 0,6 bis 0,8.

Nach dem Wechsel des Arbeitsmodus ab dem Zeitpunkt $T_2$ wird der $NO_x$-Speicherkatalysator 16 für eine Phase $t_2$ mit der fetten Atmosphäre entsprechend dem Sollwert $W_f$ beaufschlagt. Kurz nach dem Erreichen des Schwellenwertes $S_m$ steigt der Lambdawert in einem Bereich 42 noch kurzfristig an, da sich der Wechsel des Arbeitsmodus nur zeitverzögert hinter dem $NO_x$-Speicherkatalysator 16 einstellt. In einem Bereich 44 fällt der Lambdawert hinter dem $NO_x$-Speicherkatalysator 16 steil ab bis zu einem Lambdawert = 1 (Bereich 46). Dabei verharrt der Wert nahe $\lambda = 1$ in dem Bereich 46 so lange, bis ab einem Punkt 48 der im $NO_x$-Speicherkatalysator 16 gespeicherte Sauerstoff und das zumindest teilweise zeitlich überlappend freigesetzte $SO_x$ soweit reduziert sind, daß das Lambdasignal allmählich in Richtung des Sollwertes $W_f$ abdriftet (Bereich 50).

Der den erneuten Wechsel des Arbeitsmodus auslösende Schwellenwert $S_f$ liegt dabei bevorzugt bei $\lambda = 0,998$ bis 0,95, ist dabei jedoch stets größer als der Sollwert $W_f$ für den fetten Arbeitsmodus. In letzterem Fall ist er insbesondere über die folgende Gleichung festlegbar:
Schwellenwert

$$S_f = \text{Sollwert } W_f + 0,1 \cdot (1,0 - \text{Sollwert } W_f)$$

Beim Erreichen oder Unterschreiten eines vorgebbaren zweiten Schwellenwertes $S_f$ wird die Verbrennungskraftmaschine 14 unter magerer Atmosphäre betrieben, und zwar entsprechend dem Sollwert $W_m$. Volumenbedingt fällt in einem Bereich 52 der Lambdawert

hinter dem $NO_x$-Speicherkatalysator 16 noch für kurze Zeit, um dann anschließend in einem Bereich 54 wieder anzusteigen. Eine Steilheit des Anstiegs im Bereich 54 wird dabei nicht nur durch die Lage des Sollwertes $W_m$ bestimmt, sondern auch durch eine zusätzliche Sauerstoffeinlagerung in den $NO_x$-Speicherkatalysator 16. Ab einem Punkt 56 ist eine Sauerstoffspeicherfähigkeit erschöpft, und daher steigt der Lambdawert in dem sich anschließenden Bereich 58 steiler an.

Ab dem Schwellenwert $S_m$ wird dann wieder die Phase $t_2$ eingeleitet, das heißt, ein Wechsel in fette Atmosphäre initiiert. Phase $t_1$ und Phase $t_2$ wiederholen sich so oft, bis ein vorgebbarer Verschwefelungsgrad erreicht wird und dann die Verbrennungskraftmaschine 14 wieder in einem Normalbetrieb geschaltet wird.

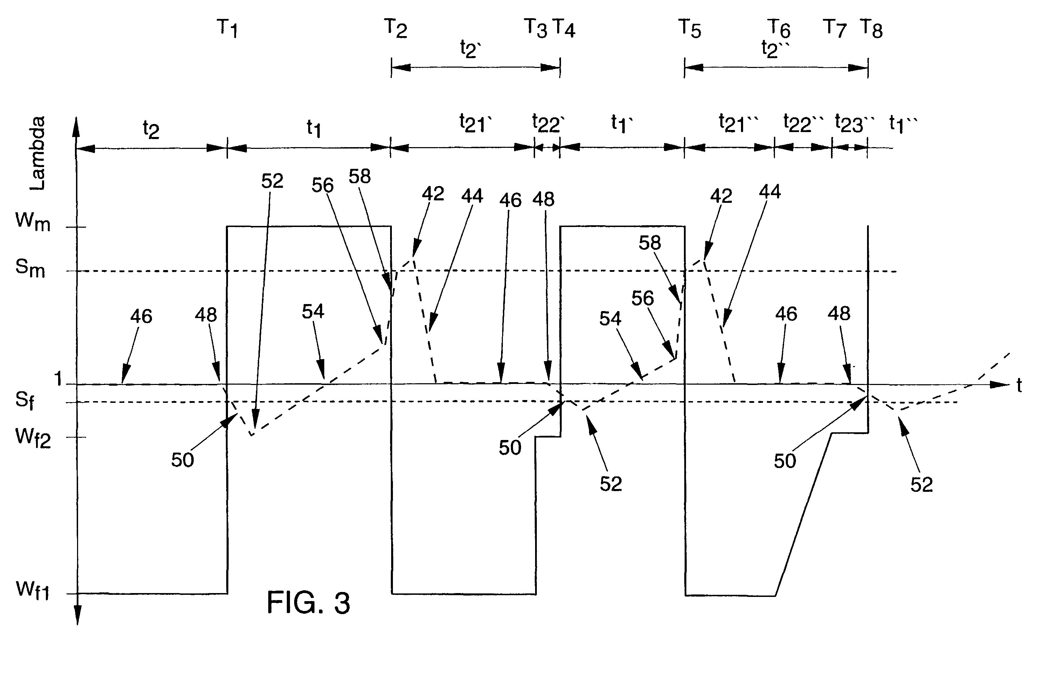

Die Figur 3 zeigt eine bevorzugte Ausgestaltung des Verfahrens anhand der Verläufe von Lambda vor und hinter dem $NO_x$-Speicherkatalysator 16. Dabei zeigen die ersten beiden Phasen $t_1$ und $t_2$ einen Verlauf, wie er bereits in der Figur 2 geschildert wurde, und sind hier zur Verdeutlichung der bevorzugten Ausgestaltung nochmals mitaufgenommen worden. Die sich hieran anschließende Phase $t_2'$ wird nun in Abhängigkeit von einer berechneten Sauerstoffspeicherfähigkeit beeinflußt.

Die Berechnung der Sauerstoffspeicherfähigkeit läßt sich auf bekannte Weise unter Berücksichtigung von einem Katalysatorvolumen, dem Lambdawert vor dem $NO_x$-Speicherkatalysator 16, der Katalysatortemperatur und einer Raumgeschwindigkeit des Abgases durchführen. Unter Berücksichtigung der berechneten Sauerstoffspeicherfähigkeit wird die Phase $t_2'$ in mindestens zwei Abschnitte $t_{21}'$ und $t_{22}'$ aufgeteilt. Dabei wird eine Dauer des Abschnittes $t_{21}'$ derart gewählt, daß in dieser Zeit 60 % bis 99 % des gespeicherten Sauerstoffs wieder entladen sind. Ab einem Zeitpunkt $T_3$ findet ein Wechsel des Arbeitsmodus der Verbrennungskraftmaschine 14 in Richtung von $\lambda = 1$ statt, wobei der $NO_x$-Speicherkatalysator 16 anschließend mit einem Lambdawert entsprechend einem vorgebbaren Sollwert $W_{f2}$ beaufschlagt wird.

Infolge der in Richtung $\lambda = 1$ verlagerten Sollwertvorgabe für den Abschnitt $t_{22}'$ der Phase $t_2'$ ändert sich auch die Steilheit des Abfalls des Lambdawertes hinter dem $NO_x$-Speicherkatalysator 16 in dem Bereich 50, da diese - wie bereits erläutert - im wesentlichen von der Lage eines aktuellen Sollwertes W abhängt. Damit wird aber auch das zeitverzögerte Übersteuern des Lambdawertes in dem Bereich 52 in seiner Höhe und in seiner Dauer gemindert. Auf diese Weise können Schadstoffdurchbrüche stark verringert werden. Zudem wird aufgrund der geringeren Übersteuerung die sich anschließende Phase $t_1'$ verkürzt, so daß insgesamt die Entschwefelungszeit sinkt.

Die bevorzugte Aufteilung der Phase $t_2$ kann in einem weiten Maße variabel gestaltet werden, wie es beispielhaft für die Phase $t_2''$ am Ende des Zeitstrahles aufgezeigt ist. So kann ab einem Zeitpunkt $T_6$ eine Einstellung des Sollwertes $W_{f2}$ kontinuierlich erfolgen, so daß in einem Abschnitt $t_{22}''$ ein rampenförmiger Anstieg des Lambdawertes vor dem $NO_x$-Speicherkatalysator 16 erfaßt werden kann. Ab einem Zeitpunkt $T_7$ wird dann in einem Abschnitt $t_{23}''$ der $NO_x$-Speicherkatalysator 16 mit einem Lambdawert entsprechend dem Sollwert $W_{f2}$ beaufschlagt. Zwar wird die Phase $t_2''$ durch den kontinuierlichen Wechsel von dem Sollwert $W_{f1}$ auf den Sollwert $W_{f2}$ geringfügig verlängert, jedoch können so Schadstoffdurchbrüche infolge eines zu späten Wechsels auf den Sollwert $W_{f2}$, beispielsweise durch eine fehlerhafte Berechnung des Punktes 48, an dem der Sauerstoff des $NO_x$-Speicherkatalysators 16 entladen ist, gemindert werden. Eine Anzahl von Abschnitten t, die kumuliert die Phase $t_2$ bilden, kann selbstverständlich frei gewählt werden. Notwendige Randbedingung ist lediglich, daß der Lambdawert in den einzelnen aufeinanderfolgenden Abschnitten t ansteigt. Jedem einzelnen Abschnitt t ist dann ein konstanter oder gemäß einer vorgebbaren Funktion veränderlicher Sollwert W zugeordnet.

Nach Ablauf einer vorgebbaren Zeitspanne oder nach jedem einzelnen Zyklus (Phase $t_1$ und Phase $t_2$) wird wiederum die Entschwefelungsnotwendigkeit anhand des Verschwefelungsgrades in bekannter Weise detektiert. Ist der Verschwefelungsgrad hinreichend gering, so wird die Verbrennungskraftmaschine 14 wieder in den Normalbetrieb geschaltet. Liegen jedoch weiterhin ungünstige Verschwefelungsgrade vor, so folgen wiederum Phasen $t_1$ und $t_2$. Dabei können die einzelnen Abschnitte t der Phase $t_2$ dem nun vorliegenden Katalysatorzustand neu angepaßt werden. Auf diese Weise lassen sich die Schadstoffdurchbrüche und die Entschwefelungszeit wiederum deutlich verringern.

In einer weiteren Ausgestaltung des erfindungsgemäßen Verfahrens können neben der Sauerstoffspeicherfähigkeit auch andere, den Katalysatorzustand charakterisierende Parameter zur Ausgestaltung der Phasen $t_2$ und $t_1$ herangezogen werden. So kann in jedem Zyklus die Lage der Sollwerte W in Abhängigkeit von einer aktuell gespeicherten Schwefelmasse, einer Schwefelmasse zu Beginn der Entschwefelung, der Katalysatortemperatur oder einer Dauer der vorangehenden Phasen $t_1$ und $t_2$ variiert werden. Ebenso können die Schwellenwerte $S_m$ und $S_f$ in Abhängigkeit von denselben genannten Parametern sowie in Abhängigkeit von den Sollwerten W variiert werden. Durch eine solche dynamische Anpassung an den aktuellen Katalysatorzustand ist eine weitere Optimierung der Entschwefelungszeit sowie eine weitere Reduzierung von Schadstoffdurchbrüchen möglich.

Weiterhin ist es denkbar, die Temperatur während der Entschwefelung zu variieren, insbesondere anzuheben. Ein solches Verfahren ist bekannt und soll in diesem Zusammenhang nicht näher erläutert werden.

**Patentansprüche**

1. Verfahren zur Entschwefelung von wenigstens einem in einem Abgaskanal einer Verbrennungskraftmaschine angeordneten $NO_x$-Speicherkatalysator mit wenigstens einem stromab des $NO_x$-Speicherkatalysators angeordneten Gassensor, wobei nach Feststellung einer Entschwefelungsnotwendigkeit zur Entschwefelung eine Mindesttemperatur am $NO_x$-Speicherkatalysator und ein fetter Arbeitsmodus der Verbrennungskraftmaschine mit $\lambda < 1$ durch eine zumindest temporäre Beeinflussung wenigstens eines Betriebsparameters der Verbrennungskraftmaschine eingestellt wird, **dadurch gekennzeichnet, daß**

   a) in einer ersten Phase ($t_1$) nach Feststellung der Entschwefelungsnotwendigkeit und Vorliegen der Mindesttemperatur die Verbrennungskraftmaschine (14) zunächst so lange auf einen mageren Arbeitsmodus mit $\lambda > 1$ eingestellt wird, bis an dem Gassensor (21) ein vorgebbarer erster Schwellenwert ($S_m$) für Lambda erreicht wird und

   b) in einer zweiten Phase ($t_2$) nach Erreichen des ersten Schwellenwertes ($S_m$) die Verbrennungskraftmaschine (14) auf den fetten Arbeitsmodus mit $\lambda < 1$ eingestellt wird, bis an dem Gassensor (21) ein vorgebbarer zweiter Schwellenwert ($S_f$) für Lambda erreicht wird und

   c) die erste Phase ($t_1$) und nachfolgend die zweite Phase ($t_2$) so lange wiederholt werden, bis ein vorgebbarer Verschwefelungsgrad erreicht wird.

2. Verfahren nach Anspruch 1, **dadurch gekennzeichnet, daß** die Verbrennungskraftmaschine (14) während der ersten Phase ($t_1$) auf einen mageren Arbeitsmodus entsprechend wenigstens einem Sollwert ($W_m$) eingestellt wird und während der zweiten Phase ($t_2$) die Verbrennungskraftmaschine (14) in einem fetten Arbeitsmodus entsprechend wenigstens einem Sollwert ($W_f$) eingestellt wird (Sollwerte W).

3. Verfahren nach Anspruch 2, **dadurch gekennzeichnet, daß** der Sollwert ($W_f$) in einem Bereich von $\lambda = 0{,}65$ bis $0{,}995$, bevorzugt $0{,}75$ bis $0{,}99$, insbesondere $0{,}85$ bis $0{,}98$, liegt.

4. Verfahren nach Anspruch 2, **dadurch gekennzeichnet, daß** der Sollwert ($W_m$) in einem Bereich von $\lambda = 1{,}02$ bis $4$, bevorzugt $1{,}05$ bis $1{,}7$, insbesondere $1{,}15$ bis $1{,}4$, liegt.

5. Verfahren nach einem der vorhergehenden Ansprüche, **dadurch gekennzeichnet, dass** der Schwellenwert ($S_m$) nach der Formel

$$S_m = 1 + F \cdot (\text{Sollwert } W_m - 1)$$

mit einem Faktor (f) in einem Bereich von $0{,}2$ bis $0{,}99$, bevorzugt $0{,}5$ bis $0{,}9$, insbesondere $0{,}6$ bis $0{,}8$, berechnet wird, wobei der Schwellenwert ($S_m$) mindestens bei $\lambda = 1{,}01$ liegt.

6. Verfahren nach einem der vorhergehenden Ansprüche, **dadurch gekennzeichnet, dass** der Schwellenwert ($S_f$) nach der Formel

$$S_f = W_f + 0{,}1 \cdot (1 - W_f)$$

berechnet wird und in einem Lambdabereich von $0{,}95$ bis $0{,}998$ liegt.

7. Verfahren nach einem der vorhergehenden Ansprüche, **dadurch gekennzeichnet, daß** die Sollwerte (W) in Abhängigkeit von einen Katalysatorzustand charakterisierenden Parametern eingestellt werden.

8. Verfahren nach Anspruch 7, **dadurch gekennzeichnet, daß** als Parameter des Katalysatorzustands eine aktuell gespeicherte Schwefelmasse, eine Schwefelmasse zu Beginn der Entschwefelung, eine Katalysatortemperatur, eine Sauerstoffspeicherfähigkeit oder eine Kombination derselben gewählt wird.

9. Verfahren nach einem der vorhergehenden Ansprüche, **dadurch gekennzeichnet, daß** die Sollwerte (W) in Abhängigkeit von einer Dauer der Phasen ($t_1$ und $t_2$) festgelegt werden.

10. Verfahren nach den Ansprüchen 7 bis 9, **dadurch gekennzeichnet, daß** die Phase ($t_2$) in Abhängigkeit von den den Katalysatorzustand charakterisierenden Parametern in wenigstens zwei Abschnitte (t) aufgeteilt wird, wobei jedem einzelnen Abschnitt (t) ein konstanter oder gemäß einer vorgebbaren Funktion veränderlicher Sollwert (W) zugeordnet wird und die Sollwerte in den einzelnen aufeinanderfolgenden Abschnitten (t) ansteigen.

11. Verfahren nach Anspruch 10, **dadurch gekennzeichnet, daß** eine Dauer der einzelnen Abschnitte (t) in Abhängigkeit von den den Katalysatorzustand charakterisierenden Parametern festgelegt wird.

12. Verfahren nach Anspruch 11, **dadurch gekennzeichnet, daß** eine Dauer eines ersten Abschnitts

($t_{21}$) der Phase ($t_2$) derart festgelegt wird, daß in dieser Zeit 60 bis 99 % einer in dem $NO_x$-Speicherkatalysator (16) gespeicherten Sauerstoffmasse desorbiert ist.

13. Verfahren nach einem der vorhergehenden Ansprüche, **dadurch gekennzeichnet, daß** die Entschwefelung temperaturmoduliert wird.

**Claims**

1. Method for the desulphurization of at least one $NO_x$ storage catalytic converter which is arranged in an exhaust pipe of an internal combustion engine and has at least one gas sensor arranged downstream of the $NO_x$ storage catalytic converter, in which method, after it has been determined that there is a need for desulphurization, to carry out the desulphurization a minimum temperature at the $NO_x$ storage catalytic converter and a rich operating mode of the internal combustion engine with $\lambda < 1$ are set by at least temporarily influencing at least one operating parameter of the internal combustion engine, **characterized in that**

    a) in a first phase ($t_1$) after it has been determined that there is a need for desulphurization and once the minimum temperature of the internal combustion engine (14) has been established, first of all the engine is set to a lean operating mode with $\lambda > 1$, until a predeterminable first threshold value ($S_m$) for lambda is reached at the gas sensor (21) and

    b) in a second phase ($t_2$) , after the first threshold value ($S_m$) has been reached, the internal combustion engine (14) is set to the rich operating mode with $\lambda < 1$ until a predeterminable second threshold value ($S_f$) for lambda is reached at the gas sensor (21), and

    c) the first phase ($t_1$) and then the second phase ($t_2$) are repeated until a predeterminable degree of sulphurization is achieved.

2. Method according to Claim 1, **characterized in that** during the first phase ($t_1$) the internal combustion engine (14) is set to a lean operating mode corresponding to at least one desired value ($W_m$), and during the second phase ($t_2$) the internal combustion engine (14) is set in a rich operating mode corresponding to at least one desired value ($W_f$) (desired values W).

3. Method according to Claim 2, **characterized in that** the desired value ($W_f$) is in a range of $\lambda = 0.65$ to 0.995, preferably 0.75 to 0.99, in particular 0.85 to 0.98.

4. Method according to Claim 2, **characterized in that** the desired value ($W_m$) is in a range of $\lambda = 1.02$ to 4, preferably 1.05 to 1.7, in particular 1.15 to 1.4.

5. Method according to one of the preceding claims, **characterized in that** the threshold value ($S_m$) is calculated according to the formula

$$S_m = 1 + F \cdot (\text{desired value } W_m - 1)$$

with a factor (f) in a range from 0.2 to 0.99, preferably 0.5 to 0.9, in particular 0.6 to 0.8, the threshold value ($S_m$) being at least $\lambda = 1.01$.

6. Method according to one of the preceding claims, **characterized in that** the threshold value ($S_f$) is calculated according to the formula

$$S_f = W_f + 0.1 \cdot (1 - W_f)$$

and is in a lambda range from 0.95 to 0.998.

7. Method according to one of the preceding claims, **characterized in that** the desired values (W) are set as a function of parameters which characterize a catalytic convertor state.

8. Method according to Claim 7, **characterized in that** the parameters of the catalytic converter state selected are a currently stored sulphur mass, a sulphur mass at the start of desulphurization, a catalytic converter temperature, an oxygen storage capacity or a combination thereof.

9. Method according to one of the preceding claims, **characterized in that** the desired values (W) are defined as a function of a duration of the phases ($t_1$ and $t_2$).

10. Method according to Claims 7 to 9, **characterized in that** the phase ($t_2$) is divided into at least two sections (t) as a function of the parameters which characterize the catalytic converter state, each individual section (t) being assigned a desired value (W) which is constant or can vary according to a predeterminable function, and the desired values increasing in the individual, successive sections (t).

11. Method according to Claim 10, **characterized in that** a duration of the individual sections (t) is defined as a function of the parameters which characterize the catalytic converter state.

12. Method according to Claim 11, **characterized in**

**that** a duration of a first section ($t_{21}$) of the phase ($t_2$) is defined in such a manner that during this time 60 to 99% of an oxygen mass which has been stored in the $NO_x$ storage catalytic converter (16) is desorbed.

13. Method according to one of the preceding claims, **characterized in that** the desulphurization is temperature-modulated.

**Revendications**

1. Procédé pour la désulfuration d'au moins un catalyseur accumulateur de $NO_X$ disposé dans un canal de gaz brûlés d'un moteur à combustion interne avec au moins un capteur de gaz disposé en aval du catalyseur accumulateur de $NO_X$, une température minimale sur le catalyseur accumulateur de $NO_X$ et un mode de travail riche du moteur à combustion interne avec $\lambda < 1$ étant réglés, après la constatation d'une nécessité de désulfuration, par une influence au moins temporaire sur au moins un paramètre de service du moteur à combustion interne en vue de la désulfuration, **caractérisé en ce que**

     a) lors d'une première phase ($t_1$), après la constatation de la nécessité de désulfuration et avec la présence de la température minimale, le moteur à combustion interne (14) est réglé pour commencer sur un mode de travail pauvre avec $\lambda > 1$ jusqu'à ce qu'on atteigne sur le capteur de gaz (21) une première valeur seuil ($S_m$) prédéfinissable pour lambda et
     b) lors d'une seconde phase ($t_2$), après avoir atteint la première valeur seuil ($S_m$), le moteur à combustion interne (14) est réglé sur le mode de travail riche avec $\lambda < 1$, jusqu'à ce qu'une seconde valeur seuil ($S_f$) prédéfinissable pour lambda soit atteinte sur le capteur de gaz (21) et
     c) la première phase ($t_1$) et ensuite la seconde phase ($t_2$) sont répétées jusqu'à ce qu'on obtienne un niveau de désulfuration prédéfinissable.

2. Procédé selon la revendication 1, **caractérisé en ce que** le moteur à combustion interne (14) est réglé pendant la première phase ($t_1$) sur un mode de travail pauvre en fonction d'au moins une valeur de consigne ($W_m$) et le moteur à combustion interne (14) est réglé (valeurs de consigne W) pendant la seconde phase ($t_2$) dans un mode de travail riche en fonction d'au moins une valeur de consigne ($W_f$).

3. Procédé selon la revendication 2, **caractérisé en ce que** la valeur de consigne ($W_f$) se situe dans une

plage de $\lambda = 0,65$ à $0,995$, de préférence $0,75$ à $0,99$, en particulier $0,85$ à $0,98$.

4. Procédé selon la revendication 2, **caractérisé en ce que** la valeur de consigne ($W_m$) se situe dans une plage de $\lambda = 1,02$ à $4$, de préférence $1,05$ à $1,7$, en particulier $1,15$ à $1,4$.

5. Procédé selon l'une quelconque des revendications précédentes, **caractérisé en ce que** la valeur seuil ($S_m$) est calculée selon la formule

$$S_m = 1 + F. \text{(valeur de consigne } W_m - 1)$$

avec un facteur (f) dans une plage de $0,2$ à $0,99$, de préférence $0,5$ à $0,9$, en particulier $0,6$ à $0,8$, la valeur seuil ($S_m$) se situant au moins à $\lambda = 1,01$.

6. Procédé selon l'une quelconque des revendications précédentes, **caractérisé en ce que** la valeur seuil ($S_f$) est calculée selon la formule

$$S_f = W_f + 0, 1. (1 - W_f)$$

et se situe dans une plage lambda de $0,95$ à $0,998$.

7. Procédé selon l'une quelconque des revendications précédentes, **caractérisé en ce que** les valeurs de consigne (W) sont réglées en fonction de paramètres caractérisant un état du catalyseur.

8. Procédé selon la revendication 7, **caractérisé en ce qu'**on choisit comme paramètres de l'état du catalyseur une masse de soufre actuellement stockée, une masse de soufre au début de la désulfuration, une température de catalyseur, une capacité de stockage d'oxygène ou une combinaison de ces paramètres.

9. Procédé selon l'une quelconque des revendications précédentes, **caractérisé en ce que** les valeurs de consigne (W) sont fixées en fonction d'une durée des phases ($t_1$ et $t_2$).

10. Procédé selon les revendications 7 à 9, **caractérisé en ce que** la phase ($t_2$) est divisée en fonction des paramètres caractérisant l'état du catalyseur dans au moins deux périodes (t), une valeur de consigne (W) constante ou variable selon une fonction prédéfinissable étant attribuée à chaque période (t) individuelle et les valeurs de consigne croissant dans les différentes périodes (t) successives.

11. Procédé selon la revendication 10, **caractérisé en ce qu'**une durée des différentes périodes (t) est fixée en fonction des paramètres caractérisant l'état du catalyseur.

12. Procédé selon la revendication 11, **caractérisé en ce qu'**une durée d'une première période ($t_{21}$) de la phase ($t_2$) est définie de telle sorte que 60 à 99 % d'une masse d'oxygène stockée dans le catalyseur accumulateur de $NO_X$ (16) sont désorbés au cours de cette période.

13. Procédé selon l'une quelconque des revendications précédentes, **caractérisé en ce que** la désulfuration est modulée en fonction de la température.

FIG. 1

FIG. 2

EP 1 183 453 B1

11

FIG. 3

EP 1 183 453 B1